# EUROPEAN PATENT APPLICATION

(11) **EP 4 521 847 A1**
(43) Date of publication of application: **12.03.2025**
(21) Application number: 23799635.0
(22) Date of filing: 28.04.2023
(51) Int. Cl.: H04W 76/20, H04W 76/16, H04W 48/18, H04W 76/34, H04W 60/04, H04W 88/06

(54) **METHOD AND DEVICE FOR OPERATING TERMINAL IN WIRELESS COMMUNICATION SYSTEM**

(30) Priority: 04.05.2022 US 202263338036 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2023/005869
(87) International publication number: WO 2023/214753

(57) **Abstract**

A method of operating an access management function (AMF) in a wireless communication system may comprise performing registration for first access with a first type and second access with a second type and establishing a multiple access (MA) PDU session based on at least one first protocol data unit (PDU) session for the first access with the first type and at least one second PDU session for the second access with the second type, receiving a registration request message from a terminal based on access switching, the registration request message including information on a list of PDU sessions to be activated, and performing registration for third access with the second type based on the access switching and performing an access network (AN) release procedure for the second access with the second type after performing activation of a PDU session to be switched to the third access with the second type. The AMF may perform deactivation of the at least one second PDU session through the AN release procedure based on the information on the list of PDU sessions to be activated.

## Description

### Technical Field

The following description relates to a wireless communication system and a method of operating a terminal. Specifically, it relates to a method of maintaining a service even if access switching is performed when a terminal transmits data based on a multiple access (MA) PDU (protocol data unit).

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for enabling a terminal to perform communication through 3GPP access and non-3GPP access based on an MA PDU in a wireless communication system.

The present disclosure relates to an operation method and device when a terminal performs access switching for non-3GPP access in a situation where a terminal performs communication based on an MA PDU in a wireless communication system.

The present disclosure relates to a method and device for enabling an access management function (AMF) to maintain a PDU session for new non-3GPP access based on access switching in a wireless communication system.

The present disclosure relates to a method and device for enabling a session management function (SMF) to determine whether to perform session deactivation based on information received from an AMF.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating an access management function (AMF) in a wireless communication system may comprise performing registration for first access with a first access and second access with a second type and establishing a multiple access (MA) PDU session based on at least one first protocol data unit (PDU) session for the first access with the first type and at least one second PDU session for the second access with the second type, receiving a registration request message from a terminal based on access switching, the registration request message including information on a list of PDU sessions to be activated, and performing registration for third access with the second type based on the access switching and performing an access network (AN) release procedure for the second access with the second type after performing activation of a PDU session to be switched to the third access with the second type. The AMF may perform deactivation of the at least one second PDU session through the AN release procedure based on the information on the list of PDU sessions to be activated.

In addition, as an example of the present disclosure, an access management function (AMF) operating in a wireless communication system may comprise at least one transceiver, at least one processor, and at least one memory operably connected to the at least one processor and configured to store instructions that, when executed, cause the at least one processor to perform a specific operation. The specific operation may perform registration for first access with a first type and a second type of second access, establish a multiple access (MA) PDU session based on at least one first protocol data unit (PDU) session for the first access with the first type and at least one second PDU session for the second access with the second type, control the at least one transceiver to receive a registration request message from a terminal based on access switching, the registration request message including information on a list of PDU sessions to be activated, and perform registration for third access with the second type based on the access switching and perform an access network (AN) release procedure for the second access with the second type. The AMF performs deactivation of the at least one second PDU session through the AN release procedure based on the information on the list of PDU sessions to be activated.

In addition, as an example of the present disclosure, a method of operating a terminal in a wireless communication system may comprise performing registration for first access with a first type and second access with a second type and establishing a multiple access (MA) PDU session based on at least one first protocol data unit (PDU) session for the first access with the first type and at least one second PDU session for the second access with the second type, transmitting a registration request message to an access management function (AMF) based on access switching, the registration request message including information on a list of PDU sessions to be activated, and performing registration for third access with the second type based on the access switching and performing an access network (AN) release procedure for the second access with the second type after performing activation of a PDU session to be switched to the third access with the second type. The AMF performs deactivation of the at least one second PDU session through the AN release procedure based on the information on the list of PDU sessions to be activated.

In addition, as an example of the present disclosure, a terminal operating in a wireless communication system, the terminal may comprise at least one transceiver, at least one processor, and at least one memory operably connected to the at least one processor and configured to store instructions that, when executed, cause the at least one processor to perform a specific operation. The specific operation may perform registration for first access with a first type and a second type of second access, establish a multiple access (MA) PDU session based on at least one first protocol data unit (PDU) session for the first access with the first type and at least one second PDU session for the second access with the second type, control the at least one transceiver to transmit a registration request message to an access management function (AMF) based on access switching, the registration request message including information on a list of PDU sessions to be activated, and perform registration for third access with the second type based on the access switching and perform an access network (AN) release procedure for the second access with the second type after performing activation of a PDU session to be switched to the third access with the second type. The AMF performs deactivation of the at least one second PDU session through the AN release procedure based on the information on the list of PDU sessions to be activated.

In addition, as an example of the present disclosure, a device may comprise at least one memory and at least one processor functionally connected to the at least one memory, wherein the at least one processor controls the device to perform registration for first access with a first type and a second type of second access, establish a multiple access (MA) PDU session based on at least one first protocol data unit (PDU) session for the first access with the first type and at least one second PDU session for the second access with the second type, receive a registration request message from a terminal based on access switching, the registration request message including information on a list of PDU sessions to be activated and perform registration for third access with the second type based on the access switching, perform activation of a PDU session switched to the third access with the second type, and perform an access network (AN) release procedure for the second access with the second type. The AMF performs deactivation of the at least one second PDU session through the AN release procedure based on the information on the list of PDU sessions to be activated.

In addition, as an example of the present disclosure, a non-transitory computer-readable medium storing at least one instruction may comprise the at least one instruction executable by a processor. The at least one instruction may control the device to perform registration for first access with a first type and a second type of second access, establish a multiple access (MA) PDU session based on at least one first protocol data unit (PDU) session for the first access with the first type and at least one second PDU session for the second access with the second type, receive a registration request message from a terminal based on access switching, the registration request message including information on a list of PDU sessions to be activated and perform registration for third access with the second type based on the access switching, perform activation of a PDU session switched to the third access with the second type, and perform an access network (AN) release procedure for the second access with the second type. The AMF performs deactivation of the at least one second PDU session through the AN release procedure based on the information on the list of PDU sessions to be activated.

In addition, the following may be applied in common:

As an example of the present disclosure, the list of PDU sessions to be activated may include PDU sessions to be activated in the second type of switched third access, and the AMF may perform deactivation of the remaining second PDU session except for second PDU sessions included in the list of PDU sessions to be activated among the at least one second PDU session.

In addition, as an example of the present disclosure, the AMF may determine a second PDU session requiring session switching among the at least one second PDU session and the second PDU session requiring the session switching may be maintained in an activated state.

In addition, as an example of the present disclosure, the registration request message may include an indicator indicating the access switching.

In addition, as an example of the present disclosure, the first type may be a 3GPP access type and the second type may be a non-3GPP access type.

In addition, as an example of the present disclosure, when the AN release procedure for the second access with the second type is performed, the AMF may receive a terminal context release complete message including the at least one second PDU session information for the second access with the second type, and a session management (SM) context update request for a PDU session may be transmitted to a session management function (SMF) based on the terminal context release complete message.

In addition, as an example of the present disclosure, the SM context update request for the PDU session may include a PDU session ID and PDU session deactivation information corresponding to the at least one second PDU session associated with the second access with the second type, and the SMF may perform PDU session deactivation based on the PDU session ID.

In addition, as an example of the present disclosure, the SMF may store user location information of a terminal based on the second type of switched third access when the access switching is performed.

In addition, as an example of the present disclosure, when the SM context update request for the PDU session includes the user location information of the terminal based on the second access before switching of the second type, the SMF may not perform the PDU session deactivation.

In addition, as an example of the present disclosure, the SM context update request for the PDU session may include an indicator indicating whether access switching is performed, and the SMF may not perform the PDU session deactivation based on an indicator indicating whether the access switching is performed.

### Advantageous Effects

The present disclosure can provide a method of enabling a terminal to perform communication through 3GPP access and non-3GPP access based on an MA PDU in a wireless communication system.

The present disclosure can provide an operation method when performing access switching for non-3GPP access in a situation where a terminal performs communication based on an MA PDU in a wireless communication system.

The present disclosure can provide a method of enabling an AMF to maintain a PDU session for new non-3GPP access based on access switching in a wireless communication system.

The present disclosure relates to a method of enabling an SMF to determine whether to perform session deactivation based on information received from an AMF.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a view showing a terminal deregistration procedure applicable to the present disclosure.
FIG. 6 is a view showing a method of performing an AN release procedure applicable to the present disclosure.
FIG. 7 is a view showing a method of receiving a list of PDU sessions to be activated, which is applicable to the present disclosure.
FIG. 8 is a flowchart illustrating an AMF operation method applicable to the present disclosure.
FIG. 9 is a flowchart illustrating a terminal operation method applicable to the present disclosure.
FIG. 10 is a flowchart illustrating an SMF operation method applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx" means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

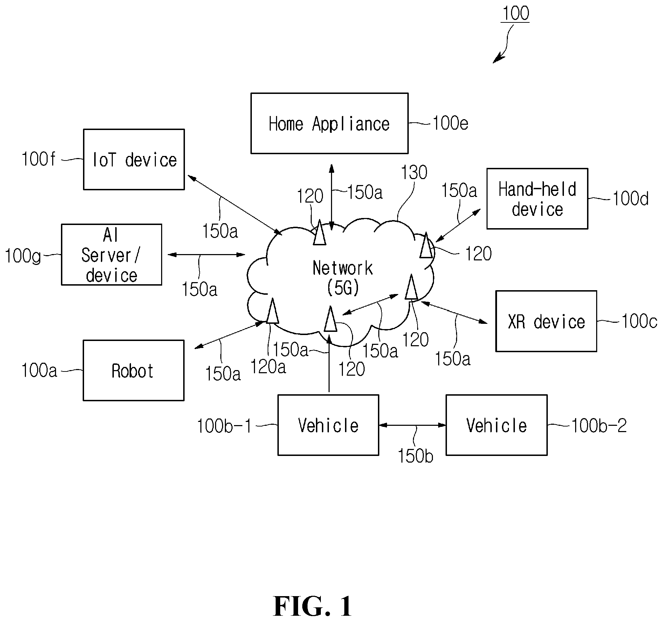

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

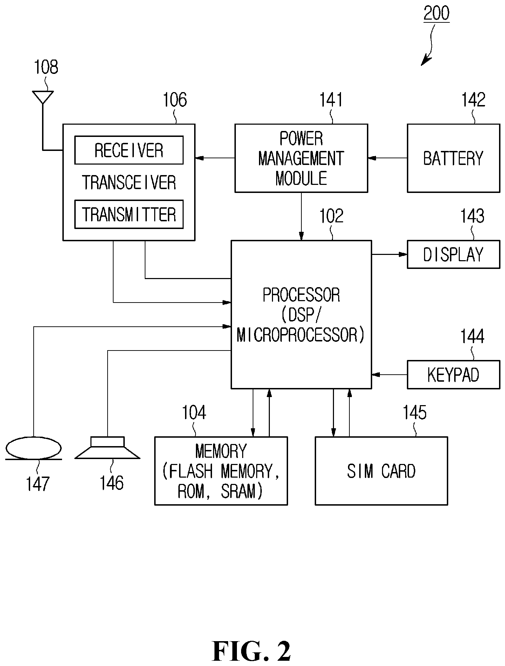

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

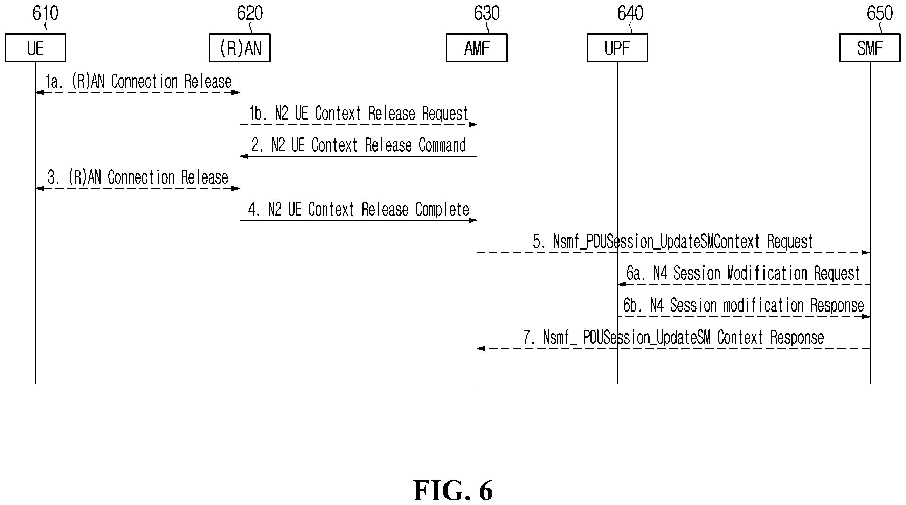

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

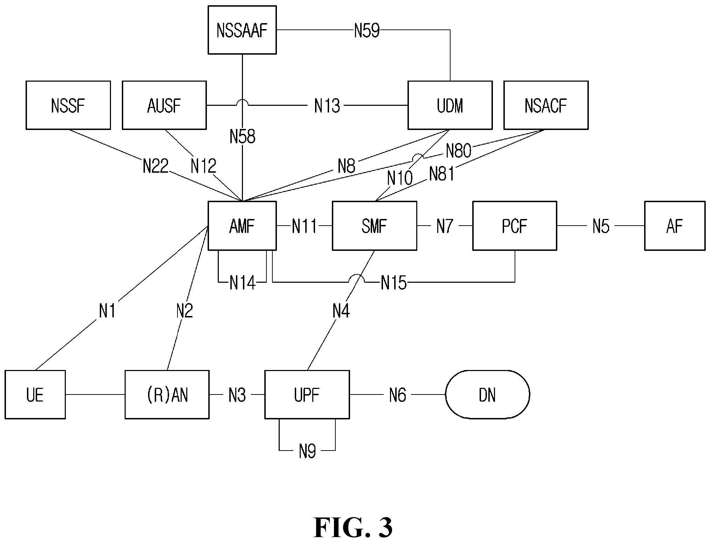

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

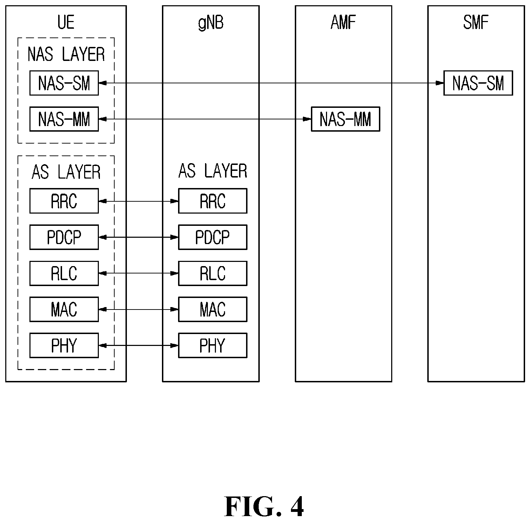

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

For example, the terminal may perform communication through a 3GPP access path and a non-3GPP access path based on an ATSSS (access traffic steering, switching and splitting) function. If the terminal supports a non-3GPP access path, the terminal may perform communication by creating a PDU session based on the 3GPP access path and the non-3GPP access path. Here, the ATSSS function may support an MA PDU (multiple access PDU) session composed of one 3GPP access path and one non-3GPP access path. That is, the terminal may perform communication through a PDU session configured based on the 3GPP access path and a PDU session configured based on the non-3GPP access path. Specifically, the terminal may transmit some data through the PDU session configured based on the 3GPP access path, and transmit other some data through the PDU session configured based on the non-3GPP access path. As another example, if a problem occurs in a PDU session while the terminal transmits data through the PDU session configured based on the 3GPP access path, data transmission may be performed through the PDU session configured based on the non-3GPP access path and is not limited to a specific form. That is, the terminal may perform communication through an MA PDU session established through multiple paths, and through this, policy-based multi-access traffic distribution and new high-speed data services may be made possible.

Here, QUIC (quick UDP internet connection)-based steering may be considered for the ATSSS function. QUIC may implement a steering function to distribute non-TCP traffic to multiple paths. Through this, the efficiency of traffic transmitted through multiple paths may be increased and the quality of service (QoS) may be improved. In addition, as an example, a redundant steering mode may be considered based on ATSSS. The redundant steering mode may be a mode for enabling or disabling packet transmission redundancy based on performance measurements and thresholds at a transmitter (UE or UPF). That is, the terminal may determine whether to transmit the same packet redundantly through different paths based on the redundant steering mode.

As another example, when the terminal is in an idle state and is out of the local area data network (LADN) service area, the terminal needs to maintain data exchange via non-3GPP access. For the above description, when the terminal receives a service from the LADN, ATSSS support may be required. Here, as an example, ATSSS may only support traffic distribution between a 3GPP access path and one non-3GPP access path, but a case where traffic distribution support for other access paths is required may be considered. As an example, when two non-3GPP accesses are provided, traffic distribution support for different access paths based on different PLMNs, such as an NTN access path and a TN access path, and for different paths, such as a path using LTE/EPC and a path using NR/5GC, may be required.

Based on the above description, a method for improving the ATSSS function may be required. For example, steering, switching and segmentation operations for non-TCP traffic flows (e.g., UDP traffic flows and IP traffic flows) may be performed based on a new steering function. In addition, segmentation for packets may be supported or a new steering function may be supported by a datagram congestion control protocol (DCCP) protocol and multipath extensions based on it, but is not limited to a specific form. As another example, more types of access paths may be supported in the MA PDU session. As a specific example, MA PDU session traffic switching may be enabled between two non-3GPP access paths within the same PLMN.

For example, the terminal may perform MA PDU session data traffic switching between a non-3GPP access path to an N3IWF within a PLMN and another non-3GPP access path from a TNGF (TNF Gateway Function). The TNGF may provide a function for handling a connection with a 3GPP external network as an entity that performs a gateway function for connecting to an external network in a 5G network. Here, the TNGF may perform a similar function to the N3IWF, but the N3IWF may be an interface for transferring non-3GPP data from the outside of the 5G network to the 5GC, and the TNGF may be an interface for controlling data flow between the 5GC and the external network, but is not limited to a specific form.

For example, a method of switching data traffic to another non-3GPP access path after a terminal registers with a 5G core network may be required. As another example, a method for enabling a terminal to switch data traffic of an MAPDU session between a non-3GPP access path based on N3IWF and a non-3GPP access path based on TNGF within a PLMN may be required.

For example, multiple non-3GPP access paths may pass through the same PLMN. Here, one non-3GPP access path may be based on N3IWF and another non-3GPP access path may be based on TNGF as described above. The terminal may perform traffic path switching from a source non-3GPP access path to a target non-3GPP access path within the same PLMN.

As described above, non-3GPP access switching may be performed based on the ATSSS function. For example, based on the non-3GPP access switching, old non-3GPP access may be switched to new non-3GPP access. Based on the above description, a PDU session based on an old non-3GPP access path may be switched to a new non-3GPP access PDU session.

Here, if the old non-3GPP access is switched to the new non-3GPP access based on non-3GPP access switching, the AMF may trigger an AN (access network) release procedure through the old non-3GPP access to deactivate the existing connection. However, if the AMF performs a deactivation procedure for the non-3GPP access based on the old AN release procedure, the PDU sessions established in the old non-3GPP access and switched to the new non-3GPP access may be deactivated. More specifically, if the AMF performs the AN release procedure, the AMF may transfer a command for AN release to a base station. The base station may transmit PDU session list information included in the base station to the AMF while transmitting an AN release complete message. Here, although the PDU sessions established in the old non-3GPP access are switched to the new non-3GPP access, the base station may transfer PDU session list information including information about the PDU sessions established in the old non-3GPP access to the AMF while transmitting the AN release complete message. The AMF may transfer the PDU session list information based on the AN release received from the base station to the SMF, and the PDU sessions included in the PDU session list may be released by the SMF. That is, the sessions switched to the new non-3GPP access may be deactivated by the AN release procedure. In the above-described situation, since a new PDU session establishment procedure for the new non-3GPP access is performed again, it may be inefficient, and a method of preventing the PDU sessions established in the old non-3GPP access from being released may be required. This will be described below.

For example, when a terminal establishes an MA PDU session, the terminal may create a PDU session based on a 3GPP access path and a PDU session based on a non-3GPP access path. Thereafter, the terminal may perform switching to a non-3GPP access. Here, as an example, it may be equally applied even when the terminal creates a PDU session only for a non-3GPP access path, and is not limited to a specific embodiment.

As a specific example, after establishing a PDU session for untrusted non-3GPP access, access switching may be performed from untrusted non-3GPP access to trusted non-3GPP access. Here, when the access switching for non-3GPP access is performed, a release operation for resources used in the old non-3GPP access may be performed (e.g. deregistration or AN release). However, if the above-described procedure is performed without change, a problem may occur in which the PDU session switched from the old non-3GPP access to the new non-3GPP access is released together with the above-described resource release procedure.

For example, when a deregistration procedure is performed as an operation to release resources in old non-3GPP access, the AMF may perform a release operation for all PDU sessions associated with the access type while performing the deregistration procedure. Here, the AMF may also release PDU sessions that have been switched from the old non-3GPP access to the new non-3GPP access, and a method of preventing this may be required, which will be described below.

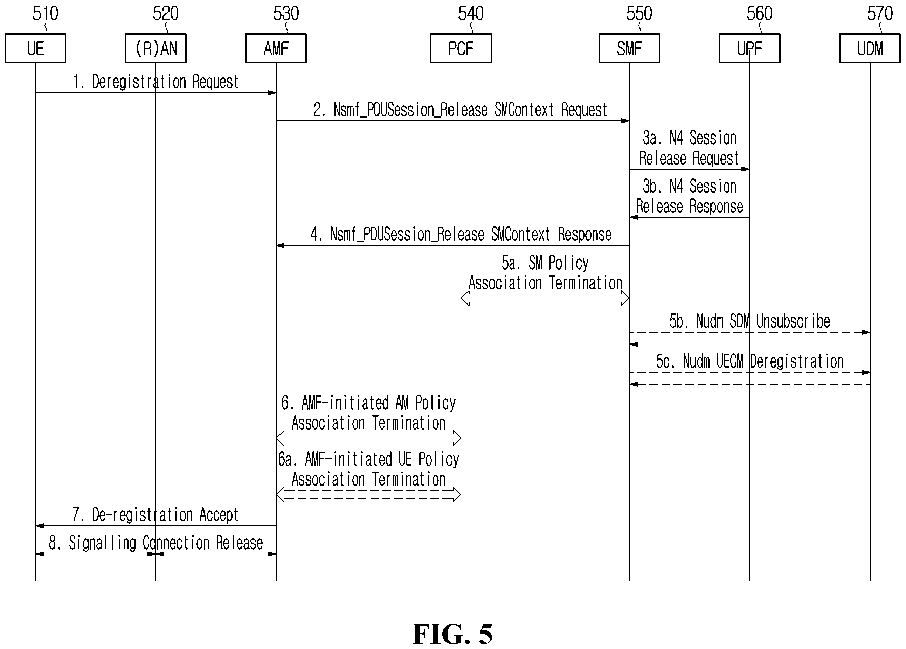

FIG. 5 is a view illustrating a terminal deregistration procedure applicable to the present disclosure. Referring to FIG. 5, an AMF 530 may receive a deregistration request message. The AMF 530 may obtain information on a list of PDU sessions to be released based on the deregistration request message, and the AMF 530 may transmit a request message for releasing SM context of PDU sessions to an SMF 550 based on the information on the list of PDU sessions. The SMF 550 may transmit an N4 session release request message to a UPF 560 for the corresponding PDU sessions, receive a response, and then transfers an SM context release response message to the AMF 530. When AMF 530 transmits an SM context release request message of PDU sessions to the SMF 550 based on the list of PDU sessions, all PDU sessions for target access set in the terminal may be released. When the above-described non-3GPP access switching is performed, the AMF 530 may release all PDU sessions for old non-3GPP access as target access. Here, a problem may arise in which even the PDU session switched to the PDU session for the new non-3GPP access among the PDU sessions for the old non-3GPP access is released.

As another example, FIG. 6 is a view showing a method of performing an AN release procedure applicable to the present disclosure. Referring to FIG. 6, a (R)AN 620 may transmit an N2 UE context release request to an AMF 630, and the AMF 630 may release a PDU session for the corresponding terminal. Here, the AMF 630 may transmit an N2 UE context release command to the (R)AN 620, and the (R)AN 620 may release radio resources and terminate the connection with a terminal 610. Thereafter, the AMF 630 may receive an N2 UE context release completion from the (R)AN 620. Here, the N2 UE context release completion may include information on a list of PDU sessions to be released. Based on the above description, the AMF 630 may release radio resources related to the terminal 610 and release the related terminal context. Thereafter, the AMF 630 may transmit an SM context update request (e.g. Nsmf_PDUSession_UpdateSMContext Request) of the PDU session to the SMF 550 for session update. Here, the request may include at least one of a PDU session ID, a PDU session deactivation, a cause, an operation type, user location information, age of location information, or N2 SM information (secondary RAT usage). As an example, if the N2 UE context release request that the (R)AN 620 transmits to the AMF 630 includes a PDU session list together with an active N3 user plane, step 2 may be performed after steps 5 to 7 in FIG. 6 are performed. In addition, as an example, the operation type may be set to "UP deactivate" indicating user plane resource deactivation of the PDU session.

Based on the above description, the SMF 650 may perform deactivation of PDU sessions for the old non-3GPP access, which may result in service interruption. Accordingly, PDU sessions switched from the old non-3GPP access to the new non-3GPP access may also be released, and an unnecessary additional procedure may be required as a procedure for reactivating the corresponding PDU sessions. In the following, considering the above-described points, a method of preventing the PDU sessions of the new non-3GPP access from being deactivated during an access switching process will be described.

As described above, a method of preventing a session from being deactivated for new access during an access switching process may be required. As an example, the following description is based on non-3GPP access, but may not be limited thereto. As an example, a similar method may be applied when access switching is performed for 3GPP access. In addition, the following description is based on a case where access switching is performed based on an MA PDU session. More specifically, there may be a case where an MA PDU session exists as a 3GPP access-based PDU session and a non-3GPP access-based PDU session. However, the present disclosure may not be limited thereto, and may be equally applied to access switching of a general PDU session, and is not limited to a specific embodiment.

As a specific example, a case may be considered where old non-3GPP access is deregistered based on a deregistration procedure. Here, according to the deregistration procedure described above, PDU sessions that have been switched to new non-3GPP access may also be released. In order to prevent the release of PDU sessions that have been switched to new non-3GPP access, the AMF may store an associated RAT type for each PDU session.

For example, the associated RAT type may be stored for all PDU sessions. That is, the associated RAT type may be stored for each PDU session.

As another example, the associated RAT type may be stored only when the PDU session is non-3GPP access or user plane resources are established for the MA PDU session via non-3GPP access. That is, the associated RAT type may not be stored in the PDU session for 3GPP access, while the associated RAT type may be stored in the PDU session for non-3GPP access. As an example, the AMF may recognize whether the PDU session is a PDU session for new non-3GPP access based on the associated RAT type.

As a specific example, the AMF may perform PDU session release only for PDU sessions for the old non-3GPP access by checking the associated RAT type for the PDU session, and may not release the PDU session for the new non-3 GPP access. Here, when switching from the old non-3GPP access to the new non-3GPP access, the associated RAT type information of the PDU session that is switched to the new non-3GPP access may be updated. For example, when the AMF receives a message requesting an MA PDU session through an uplink NAS message (e.g. UL NAS Transport) from the terminal, the AMF may update the associated RAT type information through the user location information delivered by the (R)AN that transmitted the message. As described above, the associated RAT type information of each PDU session may be updated, and the AMF may not release the PDU session for the new non-3GPP access based on the associated RAT type information of the PDU session.

As another example, a case may be considered where the old non-3GPP access is released based on an AN release procedure. For example, when access switching is performed, an AN release procedure for the old non-3GPP access may be performed. Here, according to the AN procedure described above, PDU sessions that have performed access switching to the new non-3 GPP access may also be deactivated. Therefore, the AMF needs to prevent user plane deactivation from occurring for PDU sessions of the new non-3GPP access for which access switching has been performed.

For example, the AMF may not perform user plane deactivation for all PDU sessions delivered by the (R)AN but may request the SMF to deactivate user plane for other PDU sessions except for PDU sessions for which access switching has occurred. Specifically, even for old PDU sessions, if access switching has occurred, the AMF may not perform user plane deactivation for all PDU sessions delivered by the (R)AN. In other words, the AMF may request user plane deactivation from the SMF except for the PDU session for which access switching has occurred.

Here, the AMF may obtain a list of PDU sessions to be activated in advance and use the list to store PDU sessions that have requested access switching.

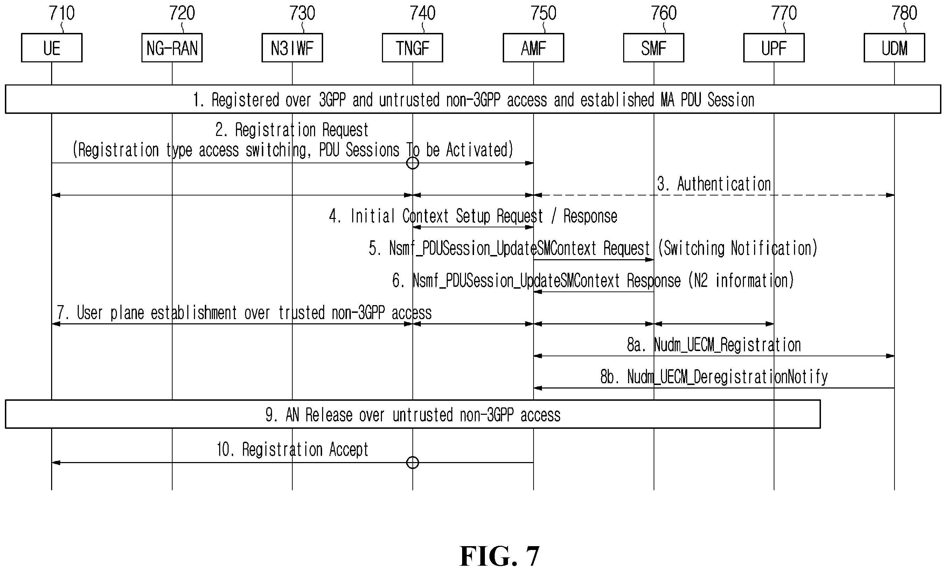

FIG. 7 is a view showing a method of receiving a list of PDU sessions to be activated, which is applicable to the present disclosure. Referring to FIG. 7, a terminal 710 may establish an MA PDU session based on 3GPP access and non-3GPP access, as described above. In a process of establishing an MA PDU session, information on whether non-3GPP access switching is supported may be included in a PDU session establishment request message. In addition, an AMF 750 may also notify the SMF 760 of information on whether non-3GPP access switching is supported. Based on the information on whether each of the terminal 710, the AMF 750, and the SMF 760 supports non-3GPP access switching, the SMF 760 may indicate whether non-3GPP access switching is supported by including it in a PDU session establishment grant message.

For example, when the terminal 710 is switched from untrusted non-3GPP access to trusted non-3GPP access and transmits a registration request to trusted non-3GPP access, a registration request message may include registration type information indicating access switching. In addition, the registration request message may include a list of PDU sessions to be activated. Here, the list of PDU sessions may be information indicating PDU sessions to be activated among PDU sessions established in the old non-3GPP access.

Thereafter, the AMF 750 may perform a registration procedure for new non-3GPP access, and in the process, may perform an AN release procedure for the old non-3GPP access. Here, as an example, the AMF 750 may store the list of PDU sessions to be activated, which is obtained based on the above description. As an example, based on FIG. 6 described above, the AMF 750 may obtain PDU session information of the old non-3GPP access from a (R)AN in the AN release procedure. That is, the AMF 750 may obtain PDU session ID information of the old non-3GPP access. Here, the AMF 750 may perform user plane deactivation only for PDU sessions except for PDU sessions included in the list of PDU sessions to be activated among the transferred PDU session IDs.

As another example, if the AMF determines a PDU session requiring PDU session switching, the AMF may request user plane deactivation except for the PDU sessions, thereby deactivating the remaining PDU sessions.

That is, after completing UP connection in new non-3GPP access, the AMF may trigger an AN release procedure for old non-3GPP access (i.e., old N3IWF or TNGF). Here, for PDU sessions which are not included in the list of PDU sessions to be activated, which is transferred by the terminal, and are indicated by the list of PDU session ID(s) with active N3 user plane, the AMF may request the SMF to deactivate the PDU session(s). The AMF may not request PDU session deactivation for other PDU session(s).

As another example, after access switching is performed, the session of the old non-3GPP access may be released based on the AN release procedure. Here, the AMF may not manage information about the PDU session for which user plane deactivation is to be performed. That is, the AMF may transmit a user plane deactivation request to the SMF to perform user plane deactivation for all PDU sessions transferred by the (R)AN. However, the SMF may not perform the corresponding operation even if it receives a user plane deactivation request from the AMF.

As a specific example, the AMF may transfer the old non-3GPP access information together with the user location information to the SMF while performing the AN release procedure. The SMF may determine whether the AMF requests user plane deactivation for the old non-3GPP access based on the received information. That is, the SMF may determine whether the AMF requests user plane deactivation for the old non-3GPP access or requests user plane deactivation for the new non-3GPP access. As an example, the SMF may receive the user plane deactivation request together with the user location information for the old non-3GPP access after access switching is performed. Here, the SMF may store the user location information of the terminal together with the new non-3GPP access and compare the received information with the corresponding information. That is, when the SMF receives the user plane resource deactivation request together with the user location information for the old non-3GPP access, the SMF may transmit a response based on the AMF request but may not perform actual user plane resource deactivation. Therefore, in the AN release procedure, the SMF may receive the AMF request, but may not perform a session change operation because the request is based on the old non-3PP access. In addition, since the user location information received by the SMF is the user location information for the old non-3GPP access, the SMF may not update the user location information.

As another example, when the AMF performs the AN release procedure after performing access switching, the AMF may transmit SM context request (e.g., Nsmf_PDUSession_UpdateSMContext Request) to the SMF based on PDU session update. Here, the AMF may transmit an indication added to the request. As a specific example, the AMF may further include an indicator indicating that the AN release procedure is performed based on access switching in addition to information included in AN release procedure. Here, the SMF supporting access switching may recognize the indicator and may not perform PDU session deactivation in the AN release procedure. That is, the SMF may not perform the session change procedure described above. On the other hand, the SMF not supporting the indicator may perform PDU session deactivation. Based on the above description, when the terminal performs access switching based on an MAPDU session between different non-3GPP accesses, PDU session resources may be released or sessions may be prevented from being released.

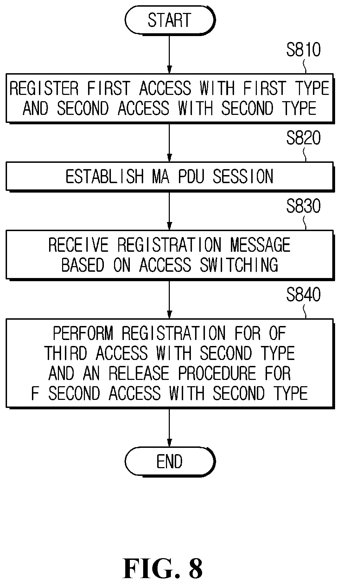

FIG. 8 is a flowchart illustrating an AMF operation method applicable to the present disclosure.

Referring to FIG. 8, the AMF may perform registration for first access with a first type and second access with a second type (S810). For example, the first type may be 3GPP access type and the second type may be non-3GPP access type. Then, the AMF may establish an MA PDU session based on at least one first PDU session for the first access with the first access and at least one second PDU session for second access with the second type (S820). That is, a PDU session based on the 3GPP access and a PDU session based on the non-3GPP access may be established. Then, access switching may be performed in the non-3GPP access. The AMF may receive a registration request message from a terminal based on access switching (S830). Here, the registration request message may include information on a list of PDU sessions to be activated. In addition, the registration request message may indicate an access switching based on a type for the registration request message. Alternatively, the registration request message may include a separate indicator requesting access switching. After that, registration for third access with the second type through the non-3GPP access and the AN release procedure for the second access with the second type may be performed (S840). Here, the AMF may perform deactivation of at least one second PDU session through the AN release procedure based on the information on the list of PDU session to be activated.

Specifically the list of PDU sessions to be activated may include PDU sessions to be activated in the switched third access with the second type. That is, the list of PDU sessions to be activated may be information on PDU sessions to be activated in the new non-3GPP access. The AMF may store information on the list of PDU sessions to be activated, and perform deactivation for the remaining second PDU sessions except for the second PDU sessions included in the information on PDU session to be activated in the AN release procedure. As another example, the AMF may directly determine a second PDU session requiring session switching among at least one second PDU session, and the second PDU session requiring session switching may be maintained in an activated state.

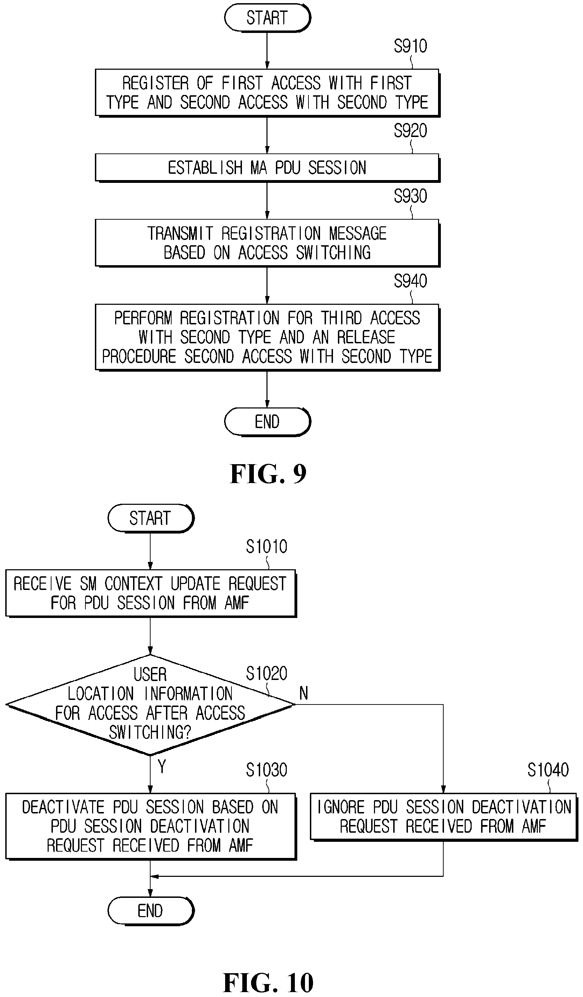

FIG. 9 is a flowchart illustrating a terminal operation method applicable to the present disclosure.

Referring to FIG. 9, , the terminal may perform registration for first access with a first type and second access with a second type (S910). For example, the first type may be 3GPP access type and the second type may be non-3GPP access type. Then, an MA PDU session may be established based on at least one first PDU session for first access with the first type and at least one second PDU session for second access with the second type (S930). That is, a PDU session based on 3GPP access and a PDU session based on non-3GPP access may be established. Then, access switching may be performed in the non-3GPP access. The terminal may transmit a registration request message to the AMF based on access switching (S930). Here, the registration request message may include information on a list of PDU sessions to be activated. In addition, the registration request message may indicate access switching using a type for the registration request message. Alternatively, the registration request message may include a separate indicator requesting access switching. After that, registration for third access with the second type through the non-3 GPP access and the AN release procedure for the second access with the second type may be performed(S940). Here, the AMF may perform deactivation of at least one second PDU session through the AN release procedure based on the information on the list of PDU sessions to be activated. Specifically, the list of PDU sessions to be activated may include PDU sessions to be activated in the switched third access with the second type. That is, the list of PDU sessions to be activated may be information on PDU sessions to be activated in the new non-3GPP access. The AMF may store the information on the list of PDU sessions to be activated, and perform deactivation of the remaining second PDU sessions except for the second PDU sessions included in the information on the list of PDU sessions to be activated in the AN release procedure. As another example, the AMF may directly determine a second PDU session requiring session switching among at least one second PDU session, and the second PDU session requiring session switching may be maintained in an activated state.

FIG. 10 is a flowchart illustrating an SMF operation method applicable to the present disclosure. Referring to FIG. 10, the SMF may receive an SM context update request for a PDU session from an AMF. (S1010) Here, the AMF may receive a terminal context release complete message including PDU session list information from a base station, and transmit an SM context update request for the PDU session to the SMF based on the terminal context release complete message. For example, the SM context update request for the PDU session may include at least one of a PDU session ID, PDU session deactivation, a cause, an operation type, user location information, age of location information, or N2 SM information (secondary RAT usage). In addition, the SMF may store user location information for new non-3GPP access when being switched to new non-3GPP access based on access switching. For example, if the SMF receives user location information after access switching, and the user location information is user location information for the access after access switching (S1020), the SMF may deactivate the PDU session based on a PDU session deactivation request received from the AMF (S 1030). On the other hand, if the SMF receives user location information after access switching, and the user location information is user location information for the access before access switching, the SMF may ignore the request from the AMF and maintain the PDU session (S 1040). In addition, the SMF may not update the user location information, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating an access management function (AMF) in a wireless communication system, the method comprising:
performing registration for first access with a first type and second access with second type and establishing a multiple access (MA) PDU session based on at least one first protocol data unit (PDU) session for the first access with the first type and at least one second PDU session for the second access with the second type;
receiving a registration request message from a terminal based on access switching, the registration request message including information on a list of PDU sessions to be activated; and
performing registration for third access with the second type based on the access switching, and performing an access network (AN) release procedure for the second access with the second type after performing activation of a PDU session switched to the third access with the second type,
wherein the AMF performs deactivation of the at least one second PDU session through the AN release procedure based on the information on the list of PDU sessions to be activated.

2. The method of claim 1,
wherein the list of PDU sessions to be activated includes PDU sessions to be activated in the switched third access with the second type, and
wherein the AMF performs deactivation of the remaining second PDU session except for second PDU sessions included in the list of PDU sessions to be activated among the at least one second PDU session.

3. The method of claim 2, wherein the AMF determines a second PDU session requiring session switching among the at least one second PDU session and the second PDU session requiring the session switching is maintained in an activated state.

4. The method of claim 1, wherein the registration request message includes an indicator indicating the access switching.

5. The method of claim 1, wherein the first type is a 3GPP access type and the second type is a non-3GPP access type.

6. The method of claim 1,
wherein, based on the AN release procedure being performed for the second access with the second type, the AMF receives a terminal context release complete message including information related to the at least one second PDU session for the second access with the second type, and
wherein a session management (SM) context update request for a PDU session is transmitted to a session management function (SMF) based on the terminal context release complete message.

7. The method of claim 6,
wherein the SM context update request for the PDU session includes PDU session deactivation information and a PDU session ID corresponding to the at least one second PDU session associated with the second access with the second type, and
wherein the SMF performs PDU session deactivation based on the PDU session ID.

8. The method of claim 7, wherein the SMF stores user location information of a terminal based on the switched third access with the second type when the access switching is performed.

9. The method of claim 8, wherein when the SM context update request for the PDU session includes the user location information of the terminal based on the second access with the second type before the access switching, the SMF does not perform the PDU session deactivation.

10. The method of claim 7,
wherein the SM context update request for the PDU session includes an indicator indicating whether access switching is performed, and
wherein the SMF does not perform the PDU session deactivation based on an indicator indicating whether the access switching is performed.

11. An access management function (AMF) operating in a wireless communication system, the AMF comprising:
at least one transceiver;
at least one processor; and
at least one memory operably connected to the at least one processor and configured to store instructions that, when executed, cause the at least one processor to perform a specific operation,
wherein the specific operation:
performs registration for first access with a first type and second access with a second type;
establishes a multiple access (MA) PDU session based on at least one first protocol data unit (PDU) session for the first access with the first type and at least one second PDU session for the second access with the second type;
controls the at least one transceiver to receive a registration request message from a terminal based on access switching, the registration request message including information on a list of PDU sessions to be activated; and
performs registration of third access with the second type based on the access switching and performs an access network (AN) release procedure for the second access with the second type,
wherein the AMF performs deactivation of the at least one second PDU session through the AN release procedure based on the information on the list of PDU sessions to be activated.

12. A method of operating a terminal in a wireless communication system, the method comprising:
performing registration for first access with a first type and second access with a second type and establishing a multiple access (MA) PDU session based on at least one first protocol data unit (PDU) session for the first access with the first type and at least one second PDU session for the second access first type;
transmitting a registration request message to an access management function (AMF) based on access switching, the registration request message including information on a list of PDU sessions to be activated; and
performing registration for third access with the second type based on the access switching and performing an access network (AN) release procedure for the second access second type after performing activation of a PDU session to be switched to the third access with second type,
wherein the AMF performs deactivation of the at least one second PDU session through the AN release procedure based on the information on the list of PDU sessions to be activated.

13. A terminal operating in a wireless communication system, the terminal comprising:
at least one transceiver;
at least one processor; and
at least one memory operably connected to the at least one processor and configured to store instructions that, when executed, cause the at least one processor to perform a specific operation,
wherein the specific operation:
performs registration for first access with a first type and second access with a second type;
establishes a multiple access (MA) PDU session based on at least one first protocol data unit (PDU) session for the first access with first type and at least one second PDU session for the second access with second type;
controls the at least one transceiver to transmit a registration request message to an access management function (AMF) based on access switching, the registration request message including information on a list of PDU sessions to be activated; and
performs registration for third access with the second type based on the access switching and performs an access network (AN) release procedure for the second access with the second type after performing activation of a PDU session to be switched to the third access with the second type,
wherein the AMF performs deactivation of the at least one second PDU session through the AN release procedure based on the information on the list of PDU sessions to be activated.

14. A device comprising at least one memory and at least one processor functionally connected to the at least one memory, wherein the at least one processor controls the device to:
perform registration for first access with a first type and second access with a second type;
establish a multiple access (MA) PDU session based on at least one first protocol data unit (PDU) session for the first access with the first type and at least one second PDU session for the second access with the second type;
receive a registration request message from a terminal based on access switching, the registration request message including information on a list of PDU sessions to be activated; and
perform registration for the third access with the second type based on the access switching, perform activation of a PDU session switched to the third access with the second type, and perform an access network (AN) release procedure for the second access with the second type,
wherein the AMF performs deactivation of the at least one second PDU session through the AN release procedure based on the information on the list of PDU sessions to be activated.

15. A non-transitory computer-readable medium storing at least one instruction, the non-transitory computer-readable recording medium comprising the at least one instruction executable by a processor,
wherein the at least one instruction controls the device to:
perform registration for first access with a first type and second access with a second type;
establish a multiple access (MA) PDU session based on at least one first protocol data unit (PDU) session for the first access with the first type and at least one second PDU session for the second access with the second type;
receive a registration request message from a terminal based on access switching, the registration request message including information on a list of PDU sessions to be activated; and
perform registration for third access with the second type based on the access switching, perform activation of a PDU session switched to the third access with the second type, and perform an access network (AN) release procedure for the second access with second type,
wherein the AMF performs deactivation of the at least one second PDU session through the AN release procedure based on the information on the list of PDU sessions to be activated.
